# EUROPEAN PATENT APPLICATION

(11) **EP 4 592 950 A1**
(43) Date of publication of application: **30.07.2025**
(21) Application number: 24154090.5
(22) Date of filing: 26.01.2024
(51) Int. Cl.: G06T 7/11

(54) **AUTOMATION OF ZERO-SHOT IMAGE SEGMENTATION**

(71) Applicant: Koninklijke Philips N.V., 5656 AG Eindhoven (NL)
(72) Inventor: NAGARAJ, Yeshwanth, Eindhoven (NL)
(74) Representative: Philips Intellectual Property & Standards

(57) **Abstract**

Disclosed herein is a medical imaging method. The method comprises: receiving (200) a medical image (124) descriptive of an internal anatomy of a subject (318); generating (202) an edge enhanced image (128) by applying an edge enhancement algorithm (126) to the medical image; generating (204) a region enhanced image (130) by applying a region generation algorithm (130) to the edge enhanced image; generating (206) a set of location points (136) uniquely identifying regions within the region enhanced image, the generating comprising applying a predetermined location identification method to the region enhanced image; receiving (208) one or more segmentation masks (138) from the zero-shot image segmentation module in response to inputting the medical image and the set of location points into a zero-shot image segmentation module (122); and providing (210) the one or more segmentation masks as a set of image segmentations of the medical image.

## Description

### FIELD OF THE INVENTION

The invention relates to image segmentation, in particular to the segmentation of medical images descriptive of internal anatomy.

### BACKGROUND OF THE INVENTION

Various medical imaging techniques such as magnetic resonance imaging, diagnostic ultrasound, and computed tomography can be used to image the internal anatomy of a subject. A common, but time-consuming task for medical professionals and radiologists is the segmentation of images. In medical image segmentation, the image may be divided into regions representing both normal and abnormal anatomical regions. Image segmentation is, for example, commonly used as an aid for interpreting medical images, during the planning of radiotherapy, and for tracking the progression of tumor growth.

Anupama Namburu, et al., "Optimized cluster centroids for segmentation of skin cancer using triangular intuitionistic fuzzy sets," ISSN 1613-0073 CEUR Workshop Proceedings (CEUR-WS.org), ACM-2022: Algorithms Computing and Mathematics Conference, August 29 - 30, 2022, pp. 66 to 85, Chennai, India discloses that Malignant Melanoma is a dangerous skin cancer and its detection is a challenging task as it appears in numerous ranges of size, shape, shading with various skin tones. Also, artifacts like hairs, outlines, blood vessels, and boils add further complexity. In this paper, a simplified clustering method is proposed to improve melanoma detection with reduced time complexity. The triangular membership function (TMF) is used to detect the initial regions for obtaining initial centroids. These initial centroids are used to apply intuitionistic fuzzy c-means clustering. The TMF helps in identifying the initial clusters and regions and reduces the number of iterations needed for segmentation.

### SUMMARY OF THE INVENTION

The invention provides for a medical system, a medical imaging method, a machine learning module, and a computer program in the independent claims. Embodiments are given in the dependent claims.

In one aspect a medical system is disclosed that comprises a memory storing machine-executable instructions and a zero-shot image segmentation module. The zero-shot image segmentation module is configured for outputting one or more segmentation masks descriptive of an input image in response to receiving the input image and one or more image queries as input. The medical system further comprises a computational system. Execution of the machine-executable instructions causes the computational system to receive a medical image descriptive of an internal anatomy of a subject. Execution of the machine-executable instructions further causes the computational system to generate an edge-enhanced image by applying an edge enhancement algorithm to the medical system. Execution of the machine-executable instructions further causes the computational system to generate a region-enhanced image by applying a region generation algorithm to the edge-enhanced image. Execution of the machine-executable instructions further causes the computational system to generate a set of location points uniquely identifying regions within the region-enhanced image. The generating comprises applying a predetermined location identification method to the region-enhanced image. Execution of the machine-executable instructions further causes the computational system to receive the one or more segmentation masks from the zero-shot image segmentation module in response to inputting the medical image as the input image into the zero-shot image segmentation module and in response to inputting the set of region-specific location points into the zero-shot image segmentation module as the one or more image queries. Execution of the machine-executable instructions further causes the computational system to provide the one or more segmentation masks as a set of image segmentations of the medical image.

In another aspect a medical imaging method is disclosed. The method comprises receiving a medical image descriptive of an internal anatomy of a subject. The method further comprises generating an edge-enhanced image by applying an edge enhancement algorithm to the medical image. The method further comprises generating a region-enhanced image by applying a region generation algorithm to the edge-enhanced image. The method further comprises generating a set of location points that uniquely identify regions within the region-enhanced image. The generating comprises applying a predetermined location identification method or algorithm to the region-enhanced image. The method further comprises receiving one or more segmentation masks from the zero-shot image segmentation module in response to inputting the medical image as an input image into the zero-shot image segmentation module in response to inputting the set of region-specific location points into the zero-shot image segmentation module as the one or more image queries. The zero-shot image segmentation module is configured for outputting the one or more segmentation masks descriptive of an input image in response to receiving the input image and the one or more image queries are input. The method further comprises providing the one or more segmentation masks as a set of image segmentations of the medical image.

In another aspect, a machine learning module trained according to the medical imaging method is disclosed. The medical imaging method further comprises repeatedly receiving the medical image and providing the set of image segmentations as an image segmentation of the medical image. The medical imaging method further comprises appending the medical image and the set of image segmentations to a set of training data. The medical image is configured as trial data and the set of image segmentations is configured as ground truth data in the set of training data. The method further comprises training the machine learning module using the training data. The invention also relates to machine learning module trained according to the medical imaging method set out in this description. Such a machine learning module may be commercially used to operate the medical imaging method.

In another aspect a computer program is disclosed that comprises machine-executable instructions configured for causing a computational system to perform the medical imaging method.

### BRIEF DESCRIPTION OF THE DRAWINGS

In the following, examples are described in greater detail making reference to the drawings in which:
Fig. 1 illustrates an example of a medical system.
Fig. 2 shows a flow chart which illustrates a method of using the medical system of Fig. 1.
Fig. 3 illustrates a further example of a medical system.
Fig. 4 shows a flow chart which illustrates a method of using the medical system of Fig. 3.
Fig. 5 shows a flow chart which illustrates a further example of a method.

### DETAILED DESCRIPTION OF EMBODIMENTS

Like numbered elements in these figures are either equivalent elements or perform the same function. Elements which have been discussed previously will not necessarily be discussed in later figures if the function is equivalent.

In an example a medical system comprises a memory storing machine-executable instructions and a zero-shot image segmentation module. A zero-shot image segmentation module may be understood as an image segmentation module that is able to segment an image and predict the image segmentations or segmentations that were both seen and not seen during training. A zero-shot image segmentation module may therefore be a segmentation module which is able to segment images without specialized training. The zero-shot image segmentation module is configured for outputting one or more segmentation masks descriptive of an input image in response to receiving the input image and one or more image queries as input. A segmentation mask as used herein may encompass an identification of a region within the input image. The segmentation masks may therefore be considered equivalent to providing an image segmentation. The one or more image queries may be queries which are provided to the zero-shot image segmentation module to specify regions which should be segmented or the segmentation to be provided.

The medical system further comprises a computational system. Execution of the machine-executable instructions causes the computational system to receive a medical image descriptive of an internal anatomy of a subject. Various types of medical images may be used. For example it may be a magnetic resonance image, a computed tomography image, an ultrasound image, a single-photon emission tomography image, a positron emission tomography image, a digital X-ray, or a digital fluoroscope image. The medical image may for example be a tomographic medical image.

Execution of the machine-executable instructions further causes the computational system to generate an edge-enhanced image by applying an edge enhancement algorithm to the medical image. Execution of the machine-executable instructions further causes the computational system to generate a region-enhanced image by applying a region generation algorithm to the edge-enhanced image. The effect of applying the edge enhancement and then the region enhancement is to provide for better definition of the various regions of the image automatically and without human intervention. Execution of the machine-executable instructions further causes the computational system to generate a set of location points uniquely identifying regions within the region-enhanced image. The generation comprises applying a predetermined location identification method or algorithm to the region-enhanced image. This may be equivalent to choosing one point within each of the regions which were enhanced by the region generation algorithm.

Execution of the machine-executable instructions further causes the computational system to receive the one or more segmentation masks from the zero-shot image segmentation module in response to inputting the medical image as the input image into the zero-shot image segmentation module and in response to inputting the set of region-specific location points into the zero-shot image segmentation module as the one or more image queries. Execution of the machine-executable instructions further causes the computational system to provide the one or more segmentation masks as a set of image segmentations of the medical image. Examples may be beneficial because they provide for the generation of the segmentation masks or segmentations of the medical image automatically. This may be useful for a variety of tasks such as for generating control commands for a medical imaging system or for generating training data automatically for training a specialized machine learning model or module.

The edge enhancement algorithm may be implemented in different ways. In one example the edge enhancement algorithm is optionally a Laplacian of Gaussian (LoG) transformation. Alternatives to the LoG algorithm may be optionally a:
∘ Gaussian Gradient Magnitude: Instead of applying the Laplacian operator after Gaussian smoothing, we can directly compute the gradient magnitude of the image using Gaussian derivatives (Sobel, Scharr, etc.).
∘ Difference of Gaussians (DoG): The DoG operator is a simplified version of the LoG, which involves subtracting two blurred versions of the image with different standard deviations. It approximates the LoG and is computationally more efficient.
∘ Marr-Hildreth Edge Detector: This is a LoG-based edge detection method that involves convolving the image with a LoG filter and then detecting zero-crossings in the result to find edges.
∘ Canny Edge Detector: The Canny edge detector combines multiple steps, including Gaussian smoothing, gradient computation, non-maximum suppression, and edge tracking by hysteresis. It produces thin, well-defined edges.
∘ Zero Crossing Detector: After applying the LoG or any edge detection filter, you can find zero-crossings in the filtered image to detect edges. Zero-crossings represent locations where the intensity changes sign, which typically corresponds to edges.
∘ Gabor Filters: Gabor filters are a family of linear filters that are often used for texture and edge analysis. They are especially effective at capturing texture information and oriented edges.
∘ Prewitt and Sobel Operators: These are basic gradient operators that can be used for edge detection. They compute the gradient of the image in both the horizontal and vertical directions.
∘ Scharr Operator: A variant of the Sobel operator with slightly better rotational symmetry. It provides improved edge detection performance in some cases.
∘ Morphological Gradient: This method uses morphological operations like dilation and erosion to compute the gradient of the image. It's useful for extracting edges and boundaries in binary images.
∘ Frei-Chen Filters: These filters are used in remote sensing and image processing for feature extraction. They are designed to capture different aspects of the image, such as edges, corners, and line-like structures.
∘ Wavelet Transforms: Various wavelet transforms, such as the Haar, Daubechies, and Gabor wavelets, can be used for edge detection and feature extraction.
∘ Roberts Cross Operator: The Roberts Cross operator is a simple edge detection method that computes the gradient using a pair of 2x2 convolution kernels. While it's not as effective as more complex methods, it is computationally efficient.
∘ Prewitt-Hess Edge Detector: This method combines the Prewitt operator with a Hess operator for improved edge detection, especially when dealing with noisy images.
∘ Scharr-Hess Edge Detector: Similar to the Prewitt-Hess detector, this approach combines the Scharr operator with a Hess operator for enhanced edge detection performance.
∘ Edge Density: Edge density methods quantify the density of edges in an image by counting the number of edge pixels in a local neighborhood. This can be used for texture analysis and feature extraction.
∘ Gabor Jet: A Gabor jet is a set of Gabor filters at different scales and orientations. It's used to capture local texture features and can be applied for texture analysis and edge detection.
∘ Laplacian Pyramid: The Laplacian pyramid is a multi-scale representation of an image. By taking the difference between successive Gaussian-blurred versions of the image, it can be used to identify and localize edges at multiple scales.
∘ Frangi Filter: The Frangi filter is designed for enhancing vessel-like structures in medical imaging but can be used for edge detection in other contexts. It's particularly useful for detecting tubular and curvilinear features.
∘ Hessian Matrix-based Methods: Hessian matrix-based methods focus on the eigenvalues and eigenvectors of the Hessian matrix to identify regions of interest, such as blob-like structures and ridges.
∘ Crest Lines: Crest lines are used for detecting ridges and valleys in an image. They represent high-curvature features and are often applied in computer vision tasks related to shape analysis. ∘ Structured Forests: Structured forests are machine learning-based approaches that learn structured models for edge detection. They have shown promise in accurately detecting object boundaries and edges.
∘ Convolutional Neural Networks (CNNs): Deep learning models like CNNs can be trained to perform edge detection tasks. They have achieved state-of-the-art results in many computer vision applications, including edge detection. In this case CNNs for edge detection.

One algorithm which can optionally be used to implement the region generation algorithm is the watershed transform. Some additional algorithms which may be optionally used as an alternative to the watershed algorithm include:
∘ Mean-Shift Segmentation: Mean-shift is a non-parametric clustering algorithm that can be used for image segmentation. It iteratively shifts data points toward the mode of the data distribution to identify regions of similar pixel values.
∘ Region Growing: Region growing is a simple yet effective method for segmenting images. It starts with a seed pixel and expands the region by adding neighboring pixels that meet certain similarity criteria.
∘ Graph Cut Segmentation: This technique formulates image segmentation as a graph optimization problem. By constructing a graph where pixels are nodes and edges represent the similarity between pixels, you can use algorithms like the max-flow min-cut to segment the image.
∘ GrabCut: GrabCut is a semi-automated segmentation technique that combines user input and iterative energy minimization. It's effective for segmenting objects in images with complex backgrounds.
∘ K-Means Clustering: K-means is a popular clustering algorithm that can be applied to pixel values in the image. It can be used for simple segmentation by partitioning the image into K clusters based on pixel color similarity.
∘ Active Contour Models (Snakes): Active contours are deformable models that evolve over the image to outline objects of interest. They can be initialized near the object boundary and adapt to object shape based on image gradients.
∘ Superpixel Segmentation: Superpixel methods divide an image into compact, perceptually meaningful regions that can serve as a preprocessing step for more advanced segmentation methods.
∘ Level Set Methods: Level set methods are used to track evolving curves and can be applied to image segmentation. They work by solving partial differential equations to deform the curve to the object boundary.
∘ Chan-Vese Segmentation: The Chan-Vese model is a variational level set method that separates objects from the background by minimizing an energy functional. It doesn't require specifying initial seed points.
∘ Fuzzy C-Means Clustering: Fuzzy C-Means is a soft clustering method that allows a pixel to belong to multiple clusters. It's useful when a pixel may have mixed characteristics from different objects.
∘ Random Walker Segmentation: The random walker algorithm treats image pixels as nodes in a graph and computes the probability of each node belonging to different segments based on user-defined markers.
∘ Boundary-Based Segmentation: This approach focuses on detecting object boundaries directly by computing gradients, edges, and other boundary features to segment objects based on their contours.
∘ Deep Learning-Based Segmentation: Convolutional neural networks (CNNs) and deep learning architectures have shown significant success in image segmentation tasks. Models like U-Net, Mask R-CNN, and FCN are popular for semantic and instance segmentation.
∘ Multi-scale Segmentation: Combining segmentation results at multiple scales of the image can provide more robust and accurate segmentations, as different scales capture different object details.

In another example, the predetermined location identification method comprises repeatedly identifying a single point within at least one of the regions within the region-enhanced image and adding the point to the set of point locations. The regions have a constant image value. The constant image value may for example optionally refer to a color, intensity or brightness. Execution of the machine-executable instructions further causes the computational system to perform any one of the following for identifying the point: calculating the point within the connected image region by calculating a centroid of the connected image region, selecting the point by determining a location within the connected region closest to a predetermined coordinate, select the point by determining a location within the connected image region using a random number, and select the point within a connected region by determining a location at least a predetermined distance from a boundary of the connected image region. All of these methods may be used to identify a single point within a particular connected or image region. This may be beneficial because it may provide for a means of automatically identifying an image region without the intervention of an operator or human.

There are a variety of algorithms and techniques which may be used to optionally implement the predetermined location identification method when the set of location points identify the centroids of the regions in the region enhanced image. Centroid point generation is a common task in various fields, including mathematics, data analysis, and computer science. Centroid points represent the center or average of a set of data points. The choice of algorithm depends on the specific context and requirements of your application. Some of these algorithms and techniques optionally include:
∘ Arithmetic Mean (Average): The most basic method, which involves adding up all the data points and dividing by the number of points to find the centroid.
∘ Geometric Mean: The geometric mean is used for datasets with multiplicative relationships. It's calculated by taking the product of all data points and then taking the nth root, where n is the number of data points.
∘ Harmonic Mean: The harmonic mean is useful when dealing with rates or ratios. It's calculated by dividing the number of data points by the sum of their reciprocals and then taking the reciprocal of the result.
∘ Weighted Mean: When each data point has a weight associated with it, you can calculate a weighted mean by multiplying each data point by its weight, summing these products, and then dividing by the sum of the weights.
∘ K-Means Clustering: In machine learning, the K-means algorithm can be used to find the centroid of clusters of data points. It's often used for data clustering, but it can also be used to find the centroid of a dataset.
∘ Kernel Density Estimation: This method estimates the probability density function of the data distribution and finds the peak as the centroid.
∘ Principal Component Analysis (PCA): PCA can be used to find the principal components of a dataset, and the centroid can be computed as the mean along these components.
∘ Voronoi Diagrams: The centroid of a set of data points can be found by computing the Voronoi diagram and taking the centroid of the Voronoi cell that contains all the points.
∘ Medoid: The medoid is the data point that minimizes the sum of distances to all other data points. It is a robust estimate of the central location of a dataset, even in the presence of outliers.
∘ Centroid of Polygon: In geometry and GIS, the centroid of a polygon is computed by finding the weighted average of its vertices or by using a more complex algorithm for irregular shapes.
∘ Spatial Data: Grid-Based Methods: For geographic data or spatial point datasets, you can use grid-based methods like grid cell centroids or quadtree-based methods to find centroids.
∘ Kernel-Based Methods: Kernel density estimation or convolutional kernel methods can be used to compute a smoothed centroid for spatial data.
∘ Convex Hull and Center of Mass: In computational geometry, you can find the centroid of a convex hull, which corresponds to the center of mass of the enclosed area.
∘ Simulated Annealing: In optimization problems, simulated annealing can be used to find the centroid by minimizing a cost function related to the data points' positions.
∘ Centroid-Based Clustering: Algorithms like DBSCAN and hierarchical clustering can be used to find centroids of clusters in data, which can be considered as representative centroids.

In another example, the region identification algorithm is configured to flood regions of the edge-enhanced region starting from multiple marker locations. Execution of the machine-executable instructions further causes the computational system to identify edges in the edge-enhanced image by using a predetermined edge detection criterion and to choose the multiple marker regions from the image locations adjacent to the edges when applying the region identification algorithm to the edge-enhanced image. For example, the region identification algorithm could be a watershed transformation which is used to create regions of an image which have a constant image value such as a constant color or intensity, or brightness. This example may be beneficial because it may provide for a means of automatically generating distinct regions within an image without the intervention of an operator or human. -

In another example, the predetermined edge detection criterion is a predetermined image value. Identifying edges in the edge-enhanced image comprises identifying regions in the edge-enhanced image varying from the predetermined image value by more than a predetermined amount. This example may provide for a means of additionally ensuring that regions are automatically identified within the image. -

In another example, the zero-shot image segmentation module is a segment anything module. The segment anything module is based on the segment anything model and is currently available from Meta AI. Examples may provide for a means of segmenting medical images automatically using the segment anything model without the intervention of a human to provide the image queries as part of the input. -

In another example, the zero-shot image segmentation module comprises a vision transformer (Vit) module trained using supervised training.

In another example, the zero-shot image segmentation module comprises a Vision Transformer module trained using supervised training with segments annotated corresponding to input images.

For example, when a ViT is used it may be incorporated into a zero-shot image segmentation module that optionally comprises an image encoder, prompt encoder, and a mask decoder. These various components are discussed below:
The Image Encoder may be a module that extracts comprehensive features from the input image. It may utilize a Transformer-based architecture, similar to ViT (Vision Transformer) models, to capture spatial and contextual information effectively. The extracted features are then compressed into a one-time embedding, representing the essence of the entire image. This embedding becomes the foundation for all subsequent processing. The image encoder may be based on the Vision Transformer (ViT) architecture, a powerful neural network for image processing.

The image encoder may play a crucial role in extracting key features and generating the one-time embedding that drives the entire segmentation process. The image encode may have the following structure where its architecture is based on the Vision Transformer (ViT) architecture, a powerful neural network for image processing. The ViT may rely on attention mechanisms to analyze relationships between different image patches, enabling it to capture both local and global features effectively. The ViT encoder typically has several transformer blocks, each consisting of self-attention layers, feed-forward layers, and residual connections. These layers further refine the extracted features and progressively build a comprehensive representation of the image.

The Encoding Process of the image encoder may include a preprocessing functionality. Here, the input image is first resized and divided into smaller patches. Each patch captures local information within the image. The encoding process may also include Patch Embedding. In Patch Embedding, each patch undergoes a linear transformation to create a vector representation. This vector encodes the visual information within that specific patch. The encoding process may also include the use of Transformer Blocks. When using transformer blocks, the encoded patches are then fed through the transformer blocks sequentially. Each transformer block may have one or more of the following features: self-attention, feed-forward layers, and residual connections. In self-attention, Each patch compares itself to all other patches, identifying relationships and dependencies between them. This allows the model to understand global context and relationships within the image. The feed-forward layers introduce non-linearity and further refine the features extracted through self-attention. The residual connections directly add the original patch embedding to the output of the transformer block. This may help preserve important information and prevents the model from losing essential details.

The encoding process may also include One-time Embedding. In one-time embedding the final output of the encoder is a single vector, capturing the essence of the entire image. This vector acts as the one-time embedding used by the subsequent prompt encoder and decoder for segmentation.

A sample architecture for the Image encoder may include the following components: an input layer to receive the input image (3-channel RGB), patching layers (e.g., 32×32) , Patch Embedding & Positional Encoding, Transformer Encoder (L Blocks), and One-time Image Embedding

Another component of the Zero-shot image segmentation module may be a prompt encoder. The prompt encoder translates the user's intent into a specific query vector, which guides the model towards the desired segmentation target. The prompt encoder may comprise a spatial encoder (for bounding boxes and points): This component encodes spatial information from bounding boxes or clicks into a vector representation. This vector captures the location and size of the desired object.
The prompt encoder may include a component for the processing of centroids. In one example, the prompt encoder is optionally configured to perform: normalization to scale the coordinates of the bounding box or point to a specific range; embedding to converting the normalized coordinates into a vector of fixed size, and positional encoding to add information about the relative position of the point within the image.

In some optional examples the prompt encoder may also include a hierarchical encoding scheme that may be used to capture spatial information at multiple scales. This involves dividing the image into smaller grids of varying sizes and encoding the point/bounding box location relative to each grid level. At each grid level, instead of simple one-hot encoding, one may utilize convolutional layers to extract more informative spatial features from the normalized coordinates. These features capture not just the location but may also capture the surrounding context and relationships with other points or objects in the image. The extracted features from each grid level are then aggregated and fused into a single, fixed-size embedding vector.

Another component of the Zero-shot image segmentation module may be a Mask Decoder. This decoder takes the one-time image embedding and the query vector as inputs. Using these inputs, it generates a high-resolution segmentation mask that accurately identifies the target object in the image. The Mask Decoder may translates user intent (encoded by the prompt encoder) into segmentation masks. The mask decoder may have one or more of the following components: an input layer for input processing functionality, a transformer block, upscaling and hypernetwork modules, and a mask output.

The input processing of the mask decoder may incorporate One-time Image Embedding for compressing representation of the entire image, generated by the image encoder, serves as the foundation for mask generation. The input processing may also be configured to receive an optional query vector which may be received from a prompt encoder and may be used to encapsulate or specify a selection of a segmentation.

Multiple transformer blocks may be incorporated into the mask decoder. Functionally, they may be responsible for refining the mask prediction and capturing long-range contextual dependencies. Each block may comprise: Multi-Head Self-Attention which allows the decoder to attend to different parts of the one-time image embedding, enabling it to refine and
update its understanding of the desired mask; an Attention over Query Vector which causes the mask decoder to attend to the query vector that is used to specify the user's specific intent and updating its mask prediction accordingly; a Feed-Forward Network that introduces non-linearity and allows the decoder to learn complex relationships between image features and the desired mask; and Residual Connections and Layer Normalization which function to improve stability and performance of the decoder.

The Upscaling modules may progressively increase the resolution of the predicted mask, starting from a coarse representation to a high-resolution mask that matches the original image size. This allows the model to generate detailed and accurate segmentations. The Hypernetwork Modules are optional in most implementations and may be used to dynamically adjust the upscaling process based on the predicted mask and user intent. This can further improve the quality and accuracy of the final segmentation, especially for complex or ambiguous cases.

The output of the decoder is a segmentation mask that identifies the target object or region in the image, as per the user's prompt.

A description of how the mask decoder may be trained is detailed below. The primary loss function used for training the Mask Decoder is typically a combination of: Cross-entropy loss: This measures the difference between the predicted mask and the ground truth mask, pixel by pixel; L1 loss: This helps maintain smooth edges and prevents the mask from being "jagged"; and Confidence loss: This encourages the model to be more confident in its predictions, especially for ambiguous regions.

The Mask Decoder Model may be trained on a dataset of images and corresponding segmentation masks, reaching over 1 billion marks in the open-source SA-1B dataset. This diversity in data ensures the model learns generalizable features and performs well on unseen images and tasks.

The training data can also be augmented with various techniques like rotations, flips, and color jittering to further improve robustness.

During training standard optimization algorithms like Adam may be used to update the Mask Decoder's weights based on the calculated loss. Learning rate schedules can be adjusted to control the pace of learning and prevent overfitting. Gradient clipping techniques can be used to stabilize the training process.

In another example, the zero-shot segmentation module comprises at least one user specific mask decoder trained for user specific segmentation of the input image. User specific mask decoders may be trained using the preferences of specific users or radiologist. This could be accomplished by collecting training data that comprises previous segmentations made by a specific user or by collecting modifications to the segmentation output by the mask decoder.

The zero-shot segmentation module may also comprise a default mask decoder. The default mask decoder could for example be used if a user specific mask decoder is not present or available for a particular user or if the user would prefer to disable the user specific mask decoder.

In another example, execution of the machine-executable instructions further causes the computational system to control a display to display a super position of the medical image and the set of image segmentations. This may be beneficial because it may provide for a means of automatically displaying the image segmentations on the medical image to be examined.

In another example, execution of the machine-executable instructions further causes the computational system to control a medical imaging system to acquire medical imaging data. Execution of the machine-executable instructions further causes the computational system to reconstruct the medical image from the medical imaging data. This example may be beneficial because the medical imaging system can acquire the medical imaging data and then the medical image and its segmentation may be automatically produced.

Execution of the machine-executable instructions further causes the computational system to generate medical imaging system control commands by fitting a template to the set of image segmentations. A template may for example be a set of commands which are preconfigured for controlling the medical imaging system to perform a specific imaging task of a particular anatomical region. By providing the image segmentation the template may for example be distorted or modified to fit the particular anatomy and position of a subject automatically. Execution of the machine-executable instructions further causes the computational system to acquire subsequent medical imaging data by controlling the medical imaging system with the medical imaging system control commands. Execution of the machine-executable instructions further causes the computational system to reconstruct a subsequent medical image from the subsequent medical imaging data and to provide the subsequent medical image. This example may be particularly beneficial because it may provide for a means of automatically configuring a medical imaging system to acquire clinical medical images. For example, in the case of magnetic resonance imaging the initial medical image could be a survey image which is preconfigured. This survey image could then be automatically segmented according to embodiments and then fit to a template for a requested or desired magnetic resonance imaging protocol. The templating process may respond to adjusting geometric locations of the patient or subject-specific anatomy and then modifying the pulse sequence commands. This example may therefore provide for fully automated magnetic resonance imaging or in the more general case of automatically configuring a medical imaging system to image a subject.

In another example, the medical image is a magnetic resonance image, a computed tomography image, a digital fluoroscope image, a digital X-ray, a positron emission tomography image, or a single-photon emission tomography image. This example may be beneficial because examples described herein may all be used and segmented automatically.

In another example, execution of the machine-executable instructions further causes the computational system to repeatedly receive the medical image and provide the set of image segmentations as an image segmentation of the medical image. Execution of the machine-executable instructions further causes the computational system to append the medical image and the set of image segmentations to a set of training data. The medical image is configured as trial data and the set of image segmentations is configured as ground truth data in the set of training data. Execution of the machine-executable instructions further causes the computational system to provide the training data. This embodiment may be beneficial because it may provide for the automatic generation of training data for training other neural networks or machine learning models.

In another example, execution of the machine-executable instructions further causes the computational system to train a machine learning module using the training data. This example may be beneficial because it may provide for training specialized machine learning models for performing segmentation. The zero-shot image segmentation module may for example be a large and complicated model that may not be beneficial when constructing lightweight or low memory models. This example provides for a means of transferring data or training from the zero-shot image segmentation module to a specialized machine learning module.

The machine learning module may take different forms in different examples. For example it may be one of the machine learning models that are typically used for image segmentation such as a U-Net, a ResNet, or in some examples it may be a convolutional neural network.

In another example, the zero-shot image segmentation module has a first memory size. The machine learning module has a second memory size. The first memory size is greater than the second memory size. This is beneficial because the second memory size of this new machine learning module is less. It may for example execute more rapidly or require fewer computer resources to run.

In another example, the first memory size is preferably at least two times larger than the second memory size. In another example, the first memory size is preferably at least five times larger than the second memory size. The first memory size is preferably at least ten times larger than the second memory size.

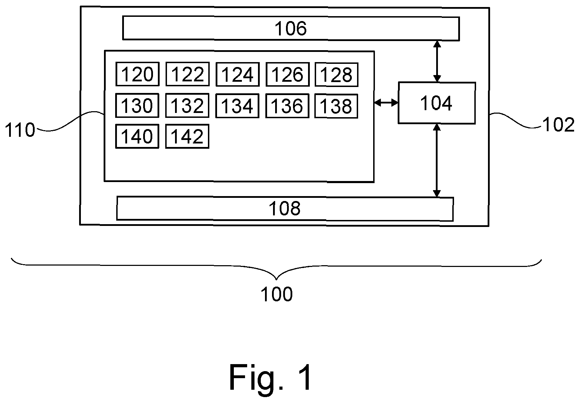

Fig. 1 illustrates an example of a medical system 100. In this example the medical system 100 comprises a computer 102. The computer 102 may represent one or more computer or computer systems located at one or more locations. The computer 102 is shown as comprising a computational system 104. The computational system 104 may represent one or more computational systems or computing cores located at one or more locations. The computations performed may be distributed in various locations. In some instances, the computer 102 could represent an internet or cloud-based system which provides image processing on demand.

The computational system 104 is shown as being connected to an optional hardware interface 106 and an optional user interface 108. The hardware interface 106 may be used to interface additional components with the computational system 104. The user interface 108 may be used by an operator to control the operation and function of the medical system 100. The computational system 104 is further shown as being in communication with a memory 110. The memory 110 is intended to represent various types of memories that may be accessible to the computational system 104.

The memory 110 is shown as containing machine-executable instructions 120. The machine-executable instructions 120 may enable the computational system 104 to control other components of the medical system 100 if they are present. The machine-executable instructions 120 may also enable the computational system 104 to provide various numerical and image processing tasks. The memory 110 is further shown as containing a medical image 124. The medical image 124 may depict an internal anatomy of a subject. The medical image 124 may be various types of images obtained from a medical scanner or a tomographic medical imaging system. The memory 110 is further shown as containing an edge enhancement algorithm 126. The memory 110 is further shown as containing an edge-enhanced image 128 that was obtained by applying the edge-enhanced algorithm 126 to the medical image 124. The memory 110 is further shown as containing a region generation algorithm 130. The region generation algorithm 130 is configured to group pixels or voxels together into individual regions. For example, the region generation algorithm 130 could be a flood algorithm which is used to assign a specific image value such as a brightness, color or other image parameter to a constant value.

The memory 110 is further shown as containing a region-enhanced image 132 that was obtained by applying the region generation algorithm 130 to the edge-enhanced image 128. The memory 110 is further shown as containing a predetermined location identification method 134 or algorithm that was used to generate a set of location points 136 from the region-enhanced image 132. For example, the set of location points 136 could contain a set of location points with one point for each region in the region-enhanced image 132. The memory 110 is further shown as containing one or more segmentation masks 138 that were obtained by inputting the medical image 124 and the set of location points 136 into the zero-shot image segmentation module 122. The one or more segmentation masks 138 are a set of image segmentations 138 of the medical image 124.

The memory 110 is further shown as optionally containing training data 140 that was obtained by repeatedly going through and generating the set of image segmentations 138 for a medical image 124. This process could be repeated a large number of times to produce the training data 140. The memory 110 is further shown as containing a machine learning module 142 that was trained using the training data 140.

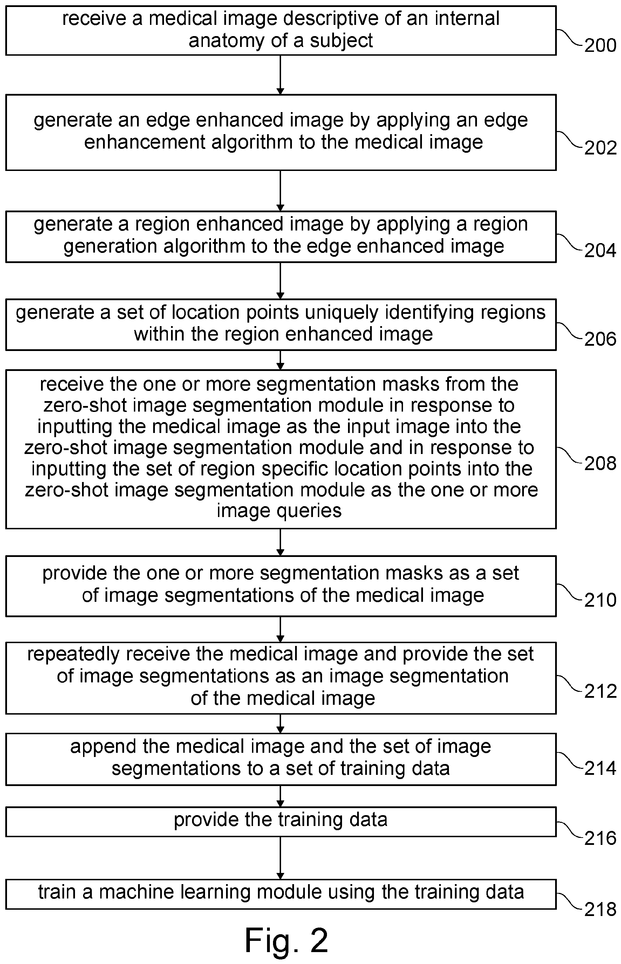

Fig. 2 shows a flowchart which illustrates a method of operating the medical system 100 of Fig. 1. In step 200, the medical image 124 is received. The medical image 124 is descriptive of an internal anatomy of a subject. In step 202, the edge-enhanced image 128 is generated by applying the edge enhancement algorithm 126 to the medical image 124. In step 204, the region-enhanced image 132 is generated by applying the region generation algorithm 130 to the edge-enhanced image 128. In step 206, the set of location points 136 is generated by identifying regions within the region-enhanced image 132. The generating comprises applying a predetermined location identification method 134 to the region-enhanced image. In step 208, the one or more segmentation masks 138 are received from the zero-shot image segmentation module 122 in response to inputting the medical image 124 as an input image and also in response to inputting the set of location points 136 as one or more image queries. In step 210, the one or more segmentation mask 138 is provided as a set of image segmentations 138 of the medical image 124.

Steps 212, 214, 216, and 218 may also optionally be performed. In step 212 the medical image 124 and the set of image segmentations 138 are repeatedly received. In step 214, the medical image 124 and its corresponding set of image segmentations 138 are appended to a set of training data 140. In step 216, the training data 140 is provided. For example, it may be stored in the memory 110 in permanent storage or may be provided to another computational system. In step 218, the machine learning module 142 is trained using the training data 140. For example, a neural network could be trained using the training data and applying a deep learning algorithm.

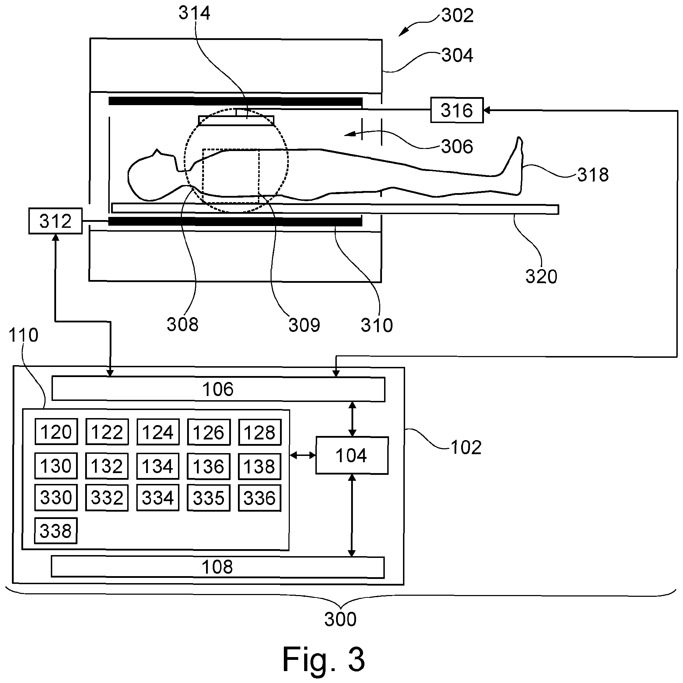

Fig. 3 illustrates a further example of a medical system 300. The medical system 300 is similar to the medical system 100 except that it additionally comprises a magnetic resonance imaging system 302 that is controlled by the hardware interface 106.

The magnetic resonance imaging system 302 comprises a magnet 304. The magnet 304 is a superconducting cylindrical type magnet with a bore 306 through it. The use of different types of magnets is also possible; for instance it is also possible to use both a split cylindrical magnet and a so called open magnet. A split cylindrical magnet is similar to a standard cylindrical magnet, except that the cryostat has been split into two sections to allow access to the iso-plane of the magnet, such magnets may for instance be used in conjunction with charged particle beam therapy. An open magnet has two magnet sections, one above the other with a space in-between that is large enough to receive a subject: the arrangement of the two sections area similar to that of a Helmholtz coil. Open magnets are popular, because the subject is less confined. Inside the cryostat of the cylindrical magnet there is a collection of superconducting coils.

Within the bore 306 of the cylindrical magnet 304 there is an imaging zone 308 where the magnetic field is strong and uniform enough to perform magnetic resonance imaging. A field of view 309 is shown within the imaging zone 308. The k-space data that is acquired typically acquried for the field of view 309. The region of interest could be identical with the field of view 309 or it could be a sub volume of the field of view 309. A subject 318 is shown as being supported by a subject support 320 such that at least a portion of the subject 318 is within the imaging zone 308 and the field of view 309.

Within the bore 306 of the magnet there is also a set of magnetic field gradient coils 310 which is used for acquisition of preliminary k-space data to spatially encode magnetic spins within the imaging zone 308 of the magnet 304. The magnetic field gradient coils 310 connected to a magnetic field gradient coil power supply 312. The magnetic field gradient coils 310 are intended to be representative. Typically magnetic field gradient coils 310 contain three separate sets of coils for spatially encoding in three orthogonal spatial directions. A magnetic field gradient power supply supplies current to the magnetic field gradient coils. The current supplied to the magnetic field gradient coils 310 is controlled as a function of time and may be ramped or pulsed.

Adjacent to the imaging zone 308 is a radio-frequency coil 314 for manipulating the orientations of magnetic spins within the imaging zone 308 and for receiving radio transmissions from spins also within the imaging zone 308. The radio frequency antenna may contain multiple coil elements. The radio frequency antenna may also be referred to as a channel or antenna. The radio-frequency coil 314 is connected to a radio frequency transceiver 316. The radio-frequency coil 314 and radio frequency transceiver 316 may be replaced by separate transmit and receive coils and a separate transmitter and receiver. It is understood that the radio-frequency coil 314 and the radio frequency transceiver 316 are representative. The radio-frequency coil 314 is intended to also represent a dedicated transmit antenna and a dedicated receive antenna. Likewise the transceiver 316 may also represent a separate transmitter and receivers. The radio-frequency coil 314 may also have multiple receive/transmit elements and the radio frequency transceiver 316 may have multiple receive/transmit channels. The transceiver 316 and the gradient controller 312 are shown as being connected to the hardware interface 106 of the computer system 102.

The memory 110 is further shown as containing survey scan pulse sequence commands 330. The survey scan pulse sequence commands 330 are configured for acquiring a magnetic resonance imaging over a large region of the subject 318. As such, the survey scan pulse sequence commands 330 could for example be a set of commands that are used with little or no modification before they are used. The memory 110 is further shown as containing a survey scan k-space data 332 that was acquired by controlling the magnetic resonance imaging system 302 with the survey scan pulse sequence commands 330. The medical image 124 is then reconstructed from the survey scan k-space data 332. The set of image segmentations 138 obtained from the zero-shot image segmentation module 122 can then be used for further configuration of the magnetic resonance imaging system 302. There is a pulse sequence template 334 which contains data or code which is used to generate subsequent pulse sequence commands 335 by fitting or using anatomical landmarks identified in the set of image segmentations 138.

The memory 110 is further shown as containing subsequent k-space data 336 that was obtained by controlling the magnetic resonance imaging system 302 with the pulse sequence derived from the pulse sequence template 334 and the set of image segmentations 138. The memory 110 is further shown as containing a subsequent magnetic resonance image 338 that was reconstructed from the subsequent k-space data 336. Using the example illustrated in Fig. 3, the subsequent magnetic resonance image 338 could be obtained with little or no operator configuration of the magnetic resonance imaging system 302.

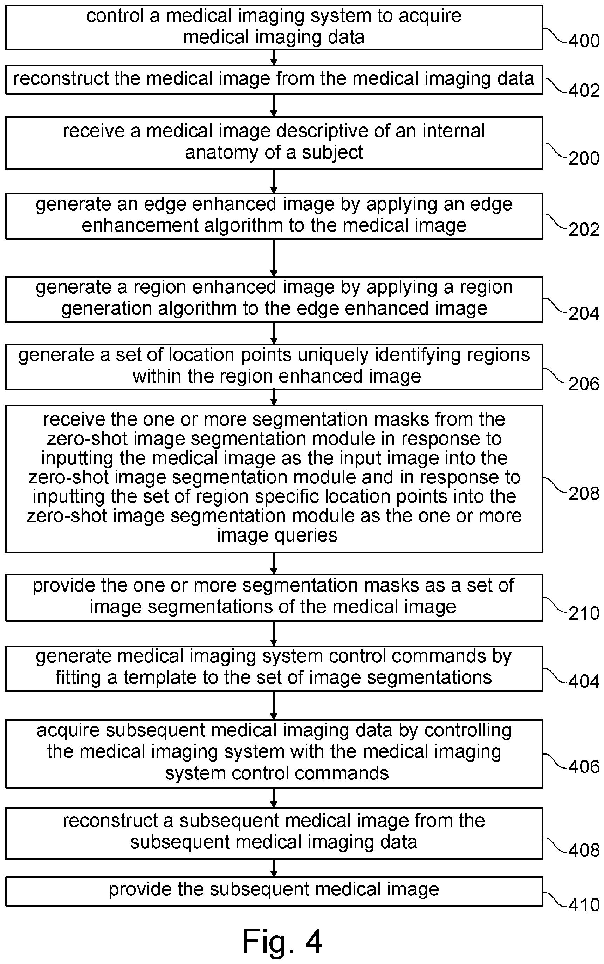

Fig. 4 shows a flowchart which illustrates a method of operating the medical system 300 of Fig. 3. In step 400, the medical imaging system, or in this case the magnetic resonance imaging system 302, is controlled to acquire medical imaging data, which in this case is the survey scan k-space data 332. In step 402, the medical image, which is in this case the image derived from the survey scan k-space data 332, is reconstructed from the survey scan k-space data 332. Steps 200, 202, 204, 206, 208, 210 are then performed as was illustrated in Fig. 2. In step 404, subsequent pulse sequence commands 335 are generated by fitting a pulse sequence template or template 334 to the set of image segmentations 138. In step 406, the subsequent medical imaging data or the subsequent k-space data 336 is acquired by controlling the medical imaging system or the magnetic resonance imaging system 302 with the medical imaging system control commands or the subsequent pulse sequence commands 335. In step 408 a subsequent medical image, or in this case the subsequent magnetic resonance image 338, is reconstructed from the subsequent medical imaging data, in this case the subsequent k-space data 336. In step 410, the subsequent medical image, which is in this case the subsequent magnetic resonance image 338, is provided.

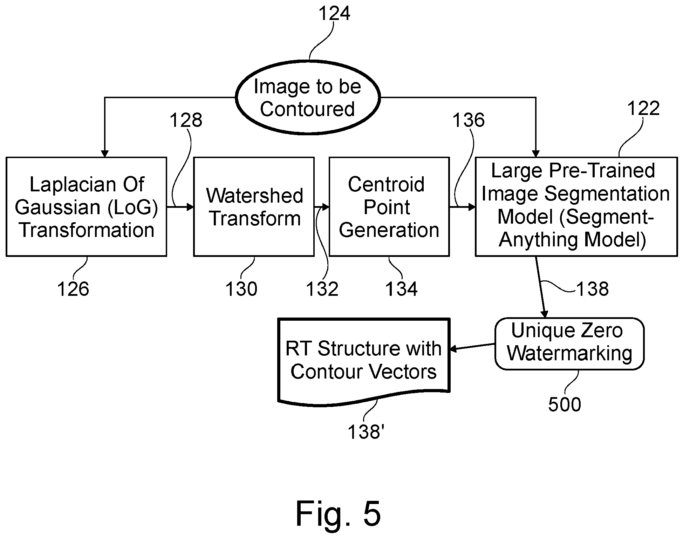

Fig. 5 shows a further flowchart which illustrates a specific implementation of the method. Block 124 represents the medical image 124 and is identified as an image to be contoured or segmented. This is then input into the edge enhancement algorithm 126, which in this example is a Laplacian of Gaussian transformation. The resulting edge-enhanced image 128 is then input into the region generation algorithm 130, which in this example is a watershed transform. The region-enhanced image 132 is then input into the predetermined location identification method 134, which is a centroid point generation module or method. This results in the set of location points 136 with the location for each of the regions in the region-enhanced image 132. The set of location points 136 and the original medical image 124 are then input into the zero-shot image segmentation module 122, which for this example is a large pre-trained image segmentation module which for example could be the segment anything model. This then outputs the one or more segmentation masks 138 which may be optionally processed with a unique zero watermarking algorithm 500. This results in a watermarked set of image segmentations 138'.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A `computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

`Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A `computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A `user interface' as used herein is an interface which allows a user or operator to interact with a computer or computer system. A `user interface' may also be referred to as a `human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A `hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or `display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen,

Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS LIST

- 100: medical system
- 102: computer
- 104: computational system
- 106: hardware interface
- 108: user interface
- 110: memory
- 120: machine executable instructions
- 122: zero-shot image segmentation module
- 124: medical image
- 126: edge enhancement algorithm
- 128: edge enhanced image
- 130: region generation algorithm
- 132: region enhanced image
- 134: predetermined location identification method
- 136: set of location points
- 138: one or more segmentation masks (set of image segmentations)
- 138': watermarked set of image segmentation
- 140: training data
- 142: machine learning module
- 200: receive a medical image descriptive of an internal anatomy of a subject
- 202: generate an edge enhanced image by applying an edge enhancement algorithm to the medical image
- 204: generate a region enhanced image by applying a region generation algorithm to the edge enhanced image
- 206: generate a set of location points uniquely identifying regions within the region enhanced image
- 208: receive the one or more segmentation masks from the zero-shot image segmentation module in response to inputting the medical image as the input image into the zero-shot image segmentation module and in response to inputting the set of region specific location points into the zero-shot image segmentation module as the one or more image queries
- 210: provide the one or more segmentation masks as a set of image segmentations of the medical image
- 212: repeatedly receive the medical image and provide the set of image segmentations as an image segmentation of the medical image
- 214: append the medical image and the set of image segmentations to a set of training data
- 216: provide the training data
- 218: train a machine learning module using the training data
- 300: medical system
- 302: magnetic resonance imaging system
- 304: magnet
- 306: bore of magnet
- 308: imaging zone
- 309: field of view
- 310: magnetic field gradient coils
- 312: magnetic field gradient coil power supply
- 314: radio-frequency coil
- 316: transceiver
- 318: subject
- 320: subject support
- 330: survey scan pulse sequence commands
- 332: survey scan k-space data
- 334: pulse sequence template
- 335: subsequent pulse sequence commands
- 336: subsequent k-space data
- 338: subsequent magnetic resonance image
- 400: control a medical imaging system to acquire medical imaging data
- 402: reconstruct the medical image from the medical imaging data
- 404: generate medical imaging system control commands by fitting a template to the set of image segmentations
- 406: acquire subsequent medical imaging data by controlling the medical imaging system with the medical imaging system control commands
- 408: reconstruct a subsequent medical image from the subsequent medical imaging data
- 410: provide the subsequent medical image
- 500: unique zero watermarking algorithm

## Claims

1. A medical system (100, 300) comprising,
- a memory (110) storing machine executable instructions (120) and a zero-shot image segmentation module (122), wherein the zero-shot image segmentation module is configured for outputting one or more segmentation masks descriptive of an input image (124) in response to receiving the input image and one or more image queries (136) as input;
- a computational system (104), wherein execution of the machine executable instructions causes the computational system to:
- receive (200) a medical image (124) descriptive of an internal anatomy of a subject (318);
- generate (202) an edge enhanced image (128) by applying an edge enhancement algorithm (126) to the medical image;
- generate (204) a region enhanced image (130) by applying a region generation algorithm (130) to the edge enhanced image;
- generate (206) a set of location points (136) uniquely identifying regions within the region enhanced image, the generating comprising applying a predetermined location identification method (134) to the region enhanced image;
- receive (208) the one or more segmentation masks (138) from the zero-shot image segmentation module in response to inputting the medical image as the input image into the zero-shot image segmentation module and in response to inputting the set of region specific location points into the zero-shot image segmentation module as the one or more image queries; and
- provide (210) the one or more segmentation masks as a set of image segmentations (138) of the medical image.

2. The medical system of claim 1, wherein the predetermined location identification method comprises repeatedly identifying a single point within at least one of the regions within the region enhanced image and adding the point to set of location points, wherein the regions have a constant image value, wherein execution of the machine executable instructions further causes the computational system to perform any one of the following for identifying the point:
- calculate the point within the connected image region by calculating a centroid of the connected image region;
- select the point by determining a location within the connected image region closest to a predetermined coordinate;
- select the point by determining a location with the connected image region using a random number; and
- select the point by determining a location at least a predetermined distance from a boundary of the connected image region.

3. The medical system of claim 1 or 2, wherein the region identification algorithm is configured to flood regions of the edge enhanced region starting from multiple marker locations, wherein execution of the machine executable instructions further causes the computational system to:
- identify edges in the edge enhance image using a predetermined edge detection criterion; and
- choose the multiple marker regions from image locations adjacent to the edges when applying the region identification algorithm to the edge enhanced image.

4. The medical system of claim 3, wherein the predetermined edge detection criterion is a predetermined image value, wherein identifying edges in the edge enhanced image comprises identifying regions in the edge enhanced image varying from the predetermined image value by more than a predetermined amount.

5. The medical system of any one of the preceding claims, wherein the zero-shot image segmentation module comprises any one of the following:
- a segment anything module; and
- a Vision Transformer module trained using supervised training with segments annotated corresponding to input images.

6. The medical system of any one of the preceding claims, wherein execution of the machine executable instructions further causes the computational system to control a display to display a superposition of the medical image and the set of image segmentations.

7. The medical system of any one of the preceding claims, wherein execution of the machine executable instructions further causes the computational system to:
- control (400) a medical imaging system (302) to acquire medical imaging data (332); and
- reconstruct (402) the medical image from the medical imaging data.

8. The medical system of claim 7, wherein execution of the machine executable instructions further causes the computational system to:
- generate (404) medical imaging system control commands (335) by fitting a template (334) to the set of image segmentations;
- acquire (406) subsequent medical imaging data (336) by controlling the medical imaging system with the medical imaging system control commands;
- reconstruct (408) a subsequent medical image (338) from the subsequent medical imaging data; and
- provide (410) the subsequent medical image.

9. The medical system of any one of the preceding claims, wherein the medical image is any one of the following: a magnetic resonance image, a computed tomography image, a digital fluoroscope image, a digital X-ray, a positron emission tomography image, and a single photon emission tomography image.

10. The medical system of any one of the preceding claims, wherein execution of the machine executable instructions further causes the computational system to:
- repeatedly (212) receive the medical image and provide the set of image segmentations as an image segmentation of the medical image; and
- append (214) the medical image and the set of image segmentations to a set of training data (140), wherein the medical image is configured as trial data and the set of image segmentation is configured as ground truth data in the set of training data; and
wherein execution of the machine executable instructions further causes the computational system to provide (216) the training data.

11. The medical system of claim 10, wherein execution of the machine executable instructions further causes the computational system to train (218) a machine learning module (142) using the training data, wherein the a zero-shot image segmentation module has a first memory size, wherein the machine learning module has a second memory size, wherein the first memory size is greater than the second memory size, wherein the first memory size is preferably at least two time larger than the second memory size, wherein the first memory size is preferably at lest five times larger than the second memory size, and wherein the first memory size is preferable at least 10 time larger than the second memory size.

12. A medical imaging method, wherein the method comprises:
- receiving (200) a medical image (124) descriptive of an internal anatomy of a subject (318);
- generating (202) an edge enhanced image (128) by applying an edge enhancement algorithm (126) to the medical image;
- generating (204) a region enhanced image (130) by applying a region generation algorithm (130) to the edge enhanced image;
- generating (206) a set of location points (136) uniquely identifying regions within the region enhanced image, the generating comprising applying a predetermined location identification method to the region enhanced image;
- receiving (208) one or more segmentation masks (138) from the zero-shot image segmentation module in response to inputting the medical image as an input image into a zero-shot image segmentation module (122) and in response to inputting the set of region specific location points into the zero-shot image segmentation module as the one or more image queries, wherein the zero-shot image segmentation module is configured for outputting the one or more segmentation masks descriptive of the input image in response to receiving the input image and the one or more image queries as input; and
- providing (210) the one or more segmentation masks as a set of image segmentations of the medical image.

13. The medical imaging method of claim 12, The medical imaging method of claim 12, wherein the zero-shot segmentation module comprises at least one user specific mask decoder trained for user specific segmentation of the input image, wherein the zero-shot segmentation module preferably comprises a default mask decoder, wherein the zero-shot segmentation module is preferably configured for selecting between the at least one user specific mask decoder and the default mask decoder.

14. The medical imaging method of claim 12 or 13, wherein the method further comprises:
- repeatedly (212) receiving the medical image and provide the set of image segmentations as an image segmentation of the medical image;
- appending (214) the medical image and the set of image segmentations to a set of training data (140), wherein the medical image is configured as trial data and the set of image segmentation is configured as ground truth data in the set of training data; and
- training (216) a machine learning module using the training data.

15. A computer program comprising machine executable instructions (120) configured for causing a computational system to perform the method of claim 12, 13, or 14.
